# EUROPÄISCHE PATENTSCHRIFT

(11) **EP 1 915 910 B1**
(45) Veröffentlichungstag und Bekanntmachung des Hinweises auf die Patenterteilung: **29.04.2009**
(21) Anmeldenummer: 06022540.6
(22) Anmeldetag: 27.10.2006
(51) Int. Cl.: A22C 15/00

(54) **Aufnahmehaken mit geometrisch veränderbarer Form**
Support hooks with variable geometry
Crochet de support à géometrie variable

(43) Veröffentlichungstag der Anmeldung: 30.04.2008
(73) Patentinhaber: Albert Handtmann Maschinenfabrik GmbH & Co. KG, 88400 Biberach (DE)
(72) Erfinder: Müller, Gerhard, 88433 Schemmerhofen (DE); Baechtle, Manfred, 88433 Schemmerhofen (DE)
(74) Vertreter: Grünecker, Kinkeldey, Stockmair & Schwanhäusser Anwaltssozietät

(56) Entgegenhaltungen:
- WO-A-92/03929
- DD-A3- 278 024
- DE-A1- 3 635 412
- DE-U1- 9 014 610

## Beschreibung

Die Erfindung betrifft einen Aufnahmehaken zum Aufhängen von gefüllten Wurstketten oder Einzelwürsten sowie eine entsprechende Aufnahmevorrichtung und ein Verfahren zum Aufhängen von gefüllten Wurstketten oder Einzelwürsten.

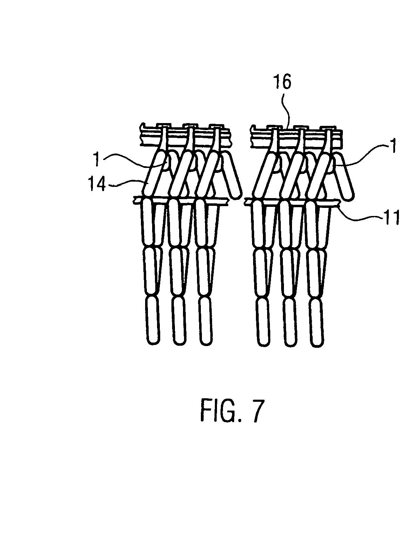

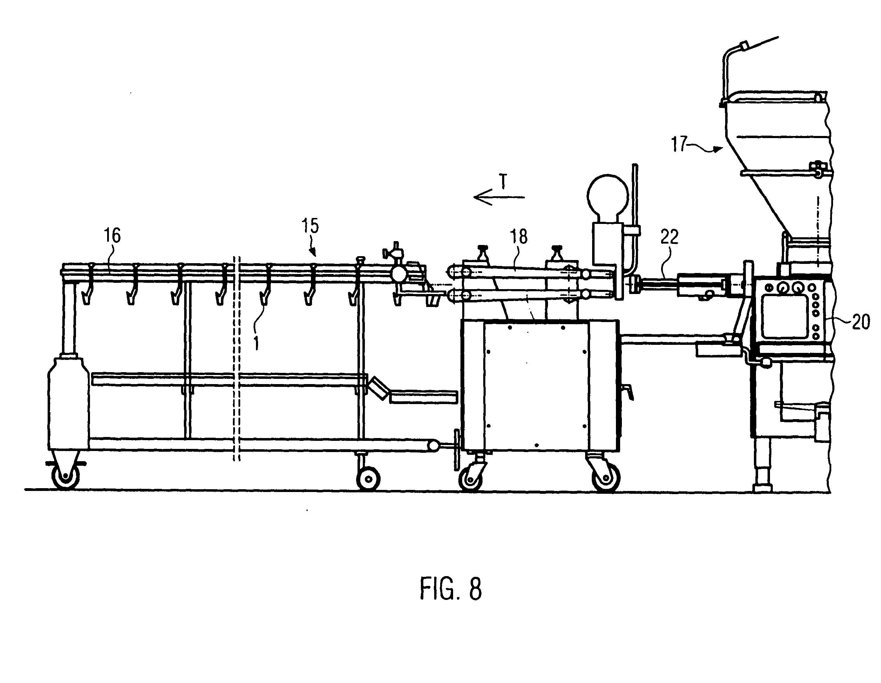

Bei der industriellen Wurstherstellung werden gefüllte Wurstketten, wie insbesondere aus den Fig. 8 und 7 zu erkennen ist, in der Regel mit einer Aufhängeeinrichtung mithilfe von Aufnahmehaken automatisch in Schleifen aufgehängt. Unter Wurstkette versteht man hier eine zusammenhängende Ansammlung von Einzelportionen oder auch kontinuierlich gefüllte Wurststränge ohne Abdrehstellen. Die Wurstketten können dabei auf dem Aufnahmehaken aufliegen.

Anschließend wird entweder manuell oder automatisch in diese Schleifen ein Rauchstock eingeführt zur Entnahme der Ketten von den Aufnahmehaken, um die Wurstketten weiteren Prozessschritten zuzuführen. Vor allem wenn die Würste paarweise aufgehängt werden, wobei hier eine Schleife nur durch jeweils eine links und rechts vom Haken nach unten hängende Wurst gebildet wird, ist es schwierig, den Rauchstock schnell einzufädeln.

Um diesen Vorgang zu erleichtern, wurden beispielsweise bereits in der WO0187077 Haken vorgeschlagen, die derart geformt waren, dass sie eine gewisse Spreizwirkung auf die Wurstschleifen ausüben.

Allerdings werden bei unterschiedlichen Bedingungen unterschiedliche Haken benötigt. Bei kleinen und engen Schleifen, wie zum Beispiel bei paarweise aufgehängten Würsten mit kleinem Kaliber werden andere Aufnahmehaken benötigt als bei größeren Schlaufen, wenn zum Beispiel eine Schlaufe aus acht Würsten besteht oder wenn Würste mit großem Kaliber aufgehängt werden. Des Weiteren sind die bekannten Spreizhaken zwar für das Einführen des Rauchstocks vorteilhaft, die Kontur kann jedoch störend sein bei der Aufnahme der Wurstkette vom Transportband auf die Haken oder auch bei der Entnahme der Wurstketten aus den Haken nach dem Einführen des Rauchstocks.

Es ist auch möglich, Wurstketten oder Einzelwürste über Aufhängeschlaufen, die als zusätzliches Element an den Anfang oder das Ende einer Wurstkette oder Einzelwurst angebracht werden, an den Haken aufzuhängen.

Auch die Größe solcher Aufhängeschleifen kann variieren, so dass nicht jede Aufnahmehakengeometrie für jede Aufhängeschlaufengröße geeignet ist.

Aus der DE-3 635 412 und der D2 : WO-92/03929 sind Aufnahmehaken mit veränderlichen Geometrie bekannt, die aus zwei unterschiedlich spreizbaren Teilhaken bestehen.

Hiervon ausgehend liegt der vorliegenden Erfindung die Aufgabe zu Grunde, einen Aufnahmehaken, eine Aufnahmevorrichtung sowie ein Verfahren zum Aufhängen von gefüllten Wurstketten oder Einzelwürsten bereitzustellen, die bei unterschiedlichen Prozessbedingungen und Prozessschritten jeweils eine optimale Hakengeometrie bieten.

Erfindungsgemäß wird diese Aufgabe durch die Merkmale der Ansprüche 1, 7 und 10 gelöst.

Dadurch, dass die geometrische Form des Auflageabschnitts des Aufnahmehakens veränderbar ist, kann die Hakengeometrie in einfacher Art und Weise an unterschiedliche Prozessbedingungen wie etwa Wurstkaliber, Anzahl der Würste in der Wurstkette, Größe der Aufhängeschlaufe etc. angepasst werden, ohne dass ein aufwendiges Umrüsten notwendig ist. Die Aufnahmehaken können somit auch an unterschiedliche Produktionsschritte angepasst werden. Somit ist ein sicheres und störungsfreies Aufnehmen und Abnehmen der Wurstketten gewährleistet. Unter veränderbarer geometrischer Form versteht man hier die Änderung der Außenkontur bzw. der Außenabmessung. Wie zuvor erwähnt umfasst der Ausdruck "gefüllte Wurstketten" sowohl zusammenhängende Ansammlungen von Einzelportionen, als auch kontinuierlich gefüllte Wurststränge ohne Abdrehstellen.

Insbesondere, wenn die laterale Außenabmessung des Auflageabschnitts verändert wird, kann der Spreizwinkel β einer aufliegenden Wurstkette bzw. der Spreizwinkel der Aufhängeschlaufe verändert werden. Unter Spreizwinkel ist hier der Winkel zu verstehen, unter welchem die auf dem Auflageabschnitt zumindest teilweise aufliegende Wurstkette bzw. Aufhängeschlaufe auseinander läuft. So kann der Spreizwinkel bei der Aufnahme der Wurstketten auf die Haken klein gewählt werden, um möglichst wenige Störkonturen zu haben. Vor dem Einführen des Rauchstocks in die Schlaufen kann der Winkel vergrößert werden, um für ein leichtes Einfädeln des Rauchstocks die Schlaufen aufzuweiten. Danach kann der Winkel falls notwendig wieder verkleinert werden, so dass die Schlaufen leichter aus den Aufnahmehaken entnommen werden können.

Gemäß der vorliegenden Erfindung kann dabei der Aufnahmehaken eine mechanische oder pneumatische Verstelleinrichtung erfassen, die die geometrische Form des Auflageabschnitts verändert.

Die mechanische Verstelleinrichtung bewegt hierzu den Auflageabschnitt oder Komponenten des Auflageabschnitts, so dass dessen Außenkontur verändert wird. Pneumatisch kann die Außengeometrie beispielsweise durch aufblasbare Kissen etc. verändert werden.

Erfindungsgemäß weist der Auflageabschnitt zwei Spreizarme auf, von denen zumindest einer beweglich ist. Dabei laufen die Spreizarme unter einem veränderbaren Winkel α aufeinander zu. Durch Ändern des Winkels α zwischen den Spreizarmen kann somit auf einfache Art und Weise auch der Spreizwinkel β der aufliegenden Wurstkette bzw. der Aufhängschlaufe verändert werden.

Die mechanische Verstelleinrichtung kann eine Kulissenführung umfassen oder aber auch motorisch verstellbar sein.

Eine Aufhängevorrichtung gemäß der vorliegenden Erfindung umfasst mehrere erfindungsgemäße Aufnahmehaken sowie eine Einrichtung zum Transportieren der Aufnahmehaken in Transportrichtung. Dabei kann die Aufhängeeinrichtung eine Kulissenführung umfassen, so dass bei Bewegung der Aufnahmehaken in Transportrichtung die geometrische Form des Auflageabschnitts verändert wird. Es ist auch möglich, dass die Aufhängeeinrichtung eine Steuerung umfasst, die während der Produktion in Abhängigkeit eines jeweiligen Produktionsschrittes eine mechanische oder pneumatische Verstelleinrichtung ansteuert, die die geometrische Form des Auflageabschnitts entsprechend verändert. Somit ist eine ideal Anpassung an verschiedene Produktionsbedingungen und -schritte möglich.

Entsprechend dem erfindungsgemäßen Verfahren kann während der Produktion die Geometrie des Auflageabschnitts verändert werden, ohne dass ein Umrüsten oder ein Stoppen der Anlage notwendig ist. Vorzugsweise ist der Spreizwinkel bei der Aufnahme der Wurstkette spitz, während der Spreizwinkel vor dem Einführen eines Rauchstocks vergrößert wird und wiederum beim Entnehmen des mit Wurstketten behängten Rauchstocks aus den Aufnahmehaken der Spreizwinkel wieder verkleinert werden kann.

Die vorliegende Erfindung wird nachfolgend unter der Bezugnahme folgender Figuren näher erläutert.
- Fig. 1: zeigt eine perspektivische Darstellung einer Ausführungsform eines Aufnahmehakens gemäß der vorliegenden Erfindung;
- Fig. 2: zeigt einen Längsschnitt durch den vorderen Abschnitt des in Fig. 1 gezeigten Aufnahmehakens;
- Fig. 3: zeigt einen Querschnitt durch den vorderen Abschnitt des in Fig. 1 gezeigten Aufnahmehakens;
- Fig. 4a: zeigt schematisch eine auf einem Aufnahmehaken aufliegende Wurstkette mit kleinem Spreizwinkel;
- Fig. 4b: zeigt schematisch eine auf einem Aufnahmehaken aufliegende Wurstkette mit großem Spreizwinkel;
- Fig. 5a: zeigt schematisch eine auf einem Aufnahmehaken aufliegende Wurstkette mit kleinem Spreizwinkel;
- Fig. 5b: zeigt schematisch eine auf einem Aufnahmehaken aufliegende Wurstkette mit großem Spreizwinkel;
- Fig. 6: zeigt eine schematische Seitenansicht eines Aufnahmehakens gemäß der vorliegenden Erfindung;
- Fig. 7: zeigt einen Ausschnitt einer Aufhängevorrichtung mit mehreren Aufnahmehaken, an denen Wurstketten in Schlaufen aufgehängt sind;
- Fig. 8: zeigt schematisch eine Gesamtansicht einer Füllmaschine mit einer Aufhängevorrichtung gemäß der vorliegenden Erfindung;
- Fig. 9: zeigt schematisch eine Wurstkette, die über eine Aufhängeschlaufe an einem Aufnahmehaken aufgehängt ist.

Fig. 8 zeigt eine Füllmaschine 17, mit der in bekannter Weise Wursthüllen mit pastösem Gut über ein Füllrohr 22 befüllt werden können. Die gefüllten Würste werden über eine Fördereinrichtung 18 in Transportrichtung T gefördert. Hier wird als Fördereinrichtung 18 eine so genannte Längeneinheit, die zwei umlaufende Transportbänder umfasst, verwendet. Die gefüllten Würste können an bestimmten Stellen abgedreht und unterteilt werden. Es ist auch möglich, einen kontinuierlich gefüllten Wurststrang herzustellen, der keine Abdreh- bzw. Unterteilungsstellen aufweist. Die hergestellten Würste können auch voneinander abgetrennt werden, so dass Wurstketten mit mehreren Würsten erzeugt werden. Wie aus Fig. 8 hervorgeht, befindet sich in Transportrichtung nach der Füllmaschine bzw. hier hinter der Transporteinrichtung 18 eine Aufhängeeinrichtung 15, die in bekannter Weise die gefüllten Wurstketten mithilfe von Aufnahmehaken 1 automatisch in Schleifen aufhängt. Dabei werden die Aufnahmehaken 1 über eine Transporteinrichtung 16 in Transportrichtung bewegt, wobei die Aufnahmehaken 1 nach der Entnahme der Wurstketten im Kreis wieder zur Aufnahmestelle zurück gefördert werden.

Fig. 7 zeigt in Schleifen aufgehängte Wurstketten. Zur Entnahme und zum Weiterbehandeln der Würste wird wie aus Fig. 7 ersichtlich ist, ein Rauchstock 11 (entweder manuell oder automatisch) in die Schleifen eingeführt.

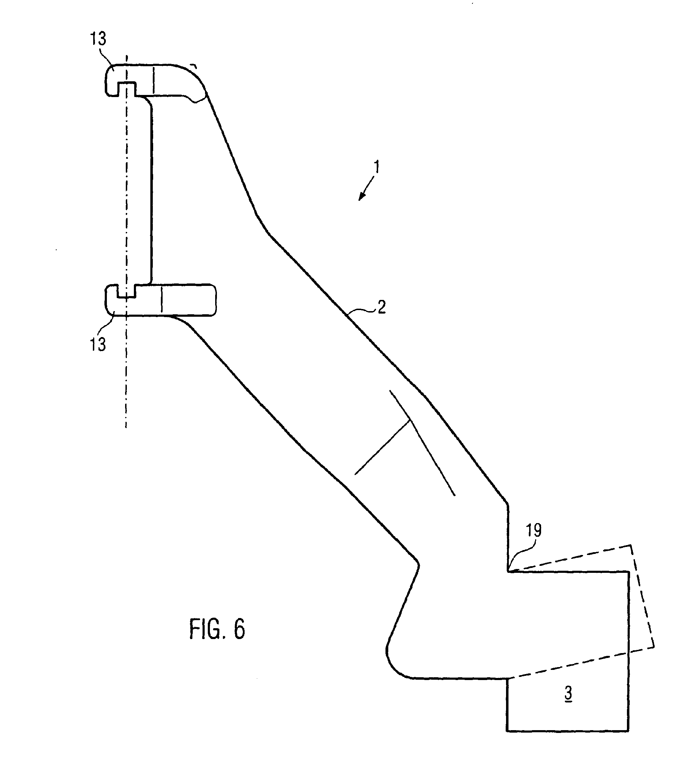

Fig. 6 zeigt schematisch eine Seitenansicht eines Aufnahmehakens gemäß der vorliegenden Erfindung. Der erfindungsgemäße Aufnahmehaken 1 umfasst einen Tragarm 2, der einen Befestigungsabschnitt 13 umfasst. Über den Befestigungsabschnitt 13 kann der Aufnahmehaken 1 an der Aufhängeeinrichtung, bzw. an der Transporteinrichtung 16 der Aufhängeeinrichtung 15 befestigt werden, so dass sich dieser zusammen mit der Transporteinrichtung in Transportrichtung T bewegen kann. Bei dieser Ausführungsform verläuft der Tragarm 2 von dem Befestigungsabschnitt 13 schräg nach unten. Im unteren Bereich des Aufnahmehakens 1 ist ein Auflageabschnitt 3 vorgesehen, auf dem die Wurstkette 14 oder aber auch eine Aufhängeschlaufe 21 zumindest teilweise aufliegt. Bei der in Fig. 6 gezeigten Ausführungsform weist der Auflageabschnitt 3 eine im Wesentlichen horizontale obere Kante auf. Wie gestrichelt dargestellt, kann die obere Außenkontur des Auflageabschnitts 3 auch vom Punkt 19 aus schräg nach oben verlaufen.

Der Auflageabschnitt 3 ist derart beschaffen, dass seine Geometrie, d. h. seine Außenabmessung veränderbar ist.

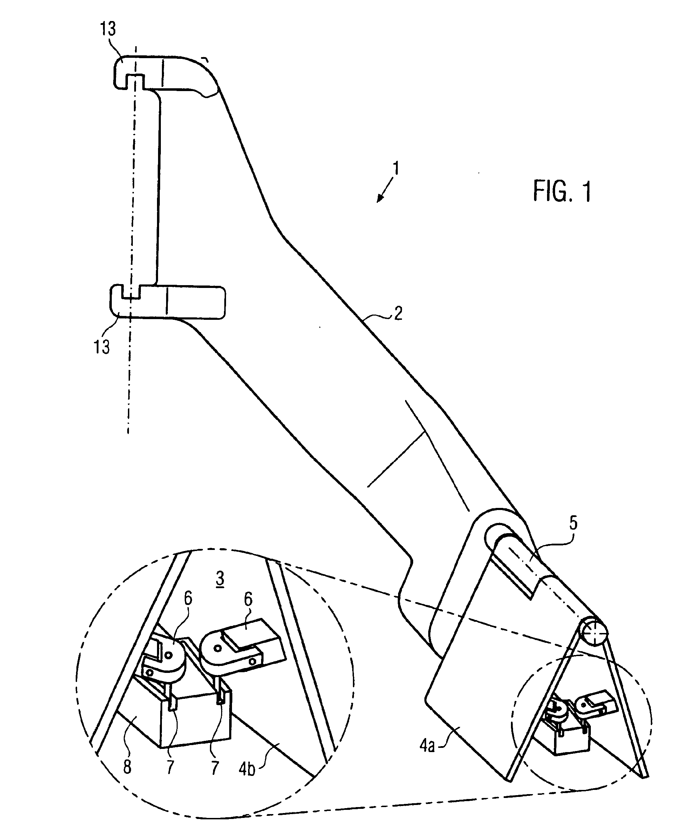

Fig. 1 zeigt eine mögliche Ausführungsform eines Auflasgeabschnitts 3 gemäß der vorliegenden Erfindung. Der Auflageabschnitt 3 umfasst hier zwei um eine Achse 5 drehbar gelagerte Spreizarme 4a, 4b.

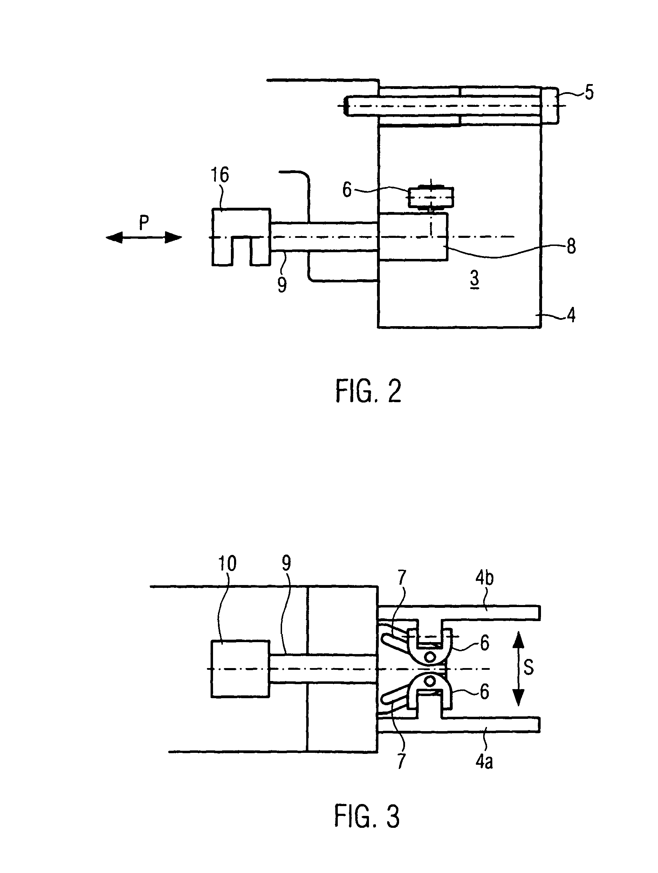

Wie auch aus Fig. 2 und 3 hervorgeht, weist der Aufnahmehaken 1 hier eine mechanische Verstelleinrichtung 6, 7, 8, 9, 10 auf. Dabei sind an der Innenseite der Spreizarme 4a, 4b Führungselemente 6 befestigt, die jeweils einen Vorsprung aufweisen, der in einem Führungsschlitz 7 des Betätigungsgliedes 8 hineinragt. Die beiden Führungsschlitze 7 sind nicht parallel zueinander angeordnet, sondern laufen wie aus den Fig. 1 und 3 hervorgeht, aufeinander zu. Bei Bewegung der Stange 9 bzw. des Betätigungsgliedes 8 in Pfeilrichtung P (Fig. 2) ändert sich somit mit dem Abstand der Führungsschlitze 7 auch der Abstand der Führungselemente 6 und letztendlich der Winkel α, unter dem die beiden Spreizarme 4a, 4b zueinander geneigt sind.

Wie aus Fig. 2 ersichtlich ist, kann die stufenlose Fernverstellung über die Bewegung des Betätigungsgliedes 8 erfolgen. Dazu kann beispielsweise eine Kulissenführung 10 vorgesehen sein, wobei das Führungsteil 10 durch eine nicht gezeigte Führung in der Aufhängeeinrichtung 15 bei Bewegung der Aufnahmehaken 1 in Transportrichtung geführt und auch in Pfeilrichtung P bewegt wird. Somit kann in Abhängigkeit der Position eines entsprechenden Aufnahmehakens 1 eine bestimmte Geometrie des Auflageabschnitts 3 realisiert werden.

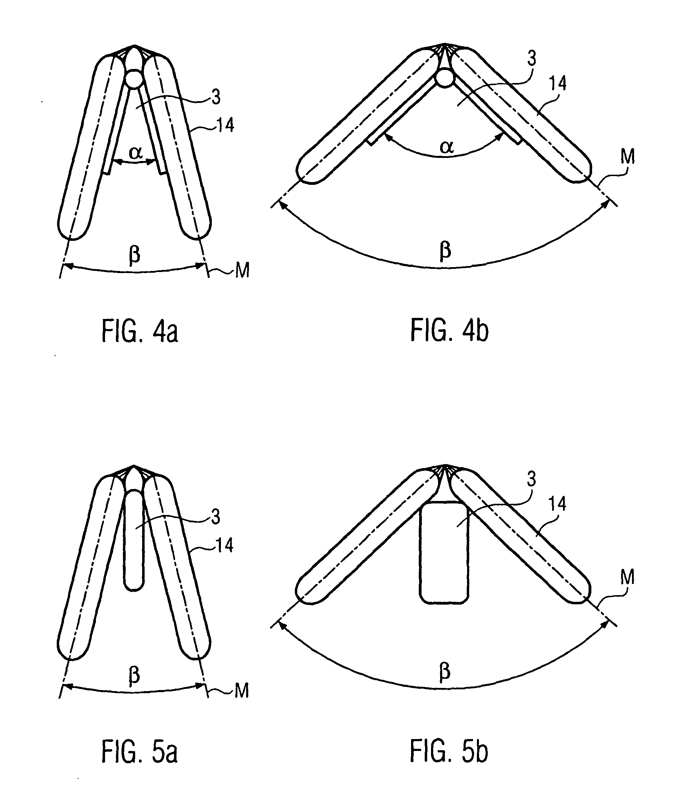

Fig. 4a zeigt schematisch eine Wurstkette 14, die über dem Auflageabschnitt 3 des Aufnahmehakens 1 seitlich, d. h. links und rechts, herabhängt. Hier weisen die Spreizarme 4a, 4b einen spitzen Winkel α zueinander auf. Demzufolge weisen auch die seitlich herabhängenden Würste der Wurstkette 14 einen spitzen Spreizwinkel β auf. Der Spreizwinkel β ist hier der Winkel, der durch die aufeinander zulaufenden Mittelachsen M der Würste gebildet wird. Bei stark gekrümmten Würsten wird nur ein oberer Abschnitt der Würste betrachtet. Ein solcher spitzer Winkel α bzw. ein Auflageabschnitt 3 mit geringer lateraler Außenabmessung ist insbesondere bei der Aufnahme der Wurstketten auf die Haken 1 von Vorteil, da ein solcher Auflageabschnitt eine kleine Störkontur aufweist.

Fig. 4b zeigt nun einen Auflageabschnitt 3 mit großer lateraler Außenabmessung. Hier wurden bei diesem Ausführungsbeispiel die Spreizarme 4a, 4b um die Achse 5 voneinander weggedreht, so dass der Winkel α vergrößert wurde. Dementsprechend wird auch die aufliegende Wurstkette 14 gespreizt. Der Spreizwinkel β in Fig. 4b ist somit deutlich größer als der Spreizwinkel β in Fig. 4a. Ein solch großer Spreizwinkel eignet sich insbesondere zum Einführen des Rauchstocks in die Schlaufen, da so die Schlaufenbreite vergrößert werden kann und der Rauchstock 11 einfacher eingefädelt werden kann.

Die Bewegung des Betätigungsgliedes 8 kann jedoch nicht nur über eine Kulissenführung realisiert werden, sondern kann auch über einen nicht dargestellten Motor erfolgen.

In Zusammenhang mit der Fig. 1 wurde eine mechanische Verstelleinrichtung 6, 7, 8, 9, 10 beschrieben, die Teile des Auflageabschnitts bewegt, um so die Außenabmessung zu verändem.

Gemäß einer weiteren Ausführungsform kann jedoch auch eine pneumatische Verstelleinrichtung vorgesehen sein, die die geometrische Form pneumatisch ändert. Dazu kann wie aus Fig. 5a und 5b hervorgeht, ein aufblasbares Kissen vorgesehen sein. In Fig. 5a hat das aufblasbare Kissen 3, das hier den Auflageabschnitt oder einen Teil des Auflageabschnitts darstellt, eine geringe laterale Außenabmessung, so dass sich ein geringer Spreizwinkel β der aufliegenden Wurstkette ergibt. Wird das Kissen aufgeblasen, so kann die laterale Außenabmessung vergrößert werden, wodurch die aufliegende Wurstkette gespreizt wird, so dass sich ein größerer Spreizwinkel β ergibt.

Wie in Fig. 8 gezeigt, weist die Aufhängevorrichtung 15 vorteilhafterweise eine Steuerung 20 auf, über die die mechanische oder pneumatische Verstelleinrichtung angesteuert wird. Die Steuereinrichtung 20 steuert die entsprechenden Verstelleinrichtungen in Abhängigkeit von Produktionsbedingungen bzw. Produktionsschritten an, so dass stets eine passende Aufnahmehakengeometrie gegeben ist. Das heißt, die Steuereinrichtung steuert beispielsweise die Bewegung des Betätigungsgliedes in Pfeilrichtung P oder aber das Aufblasen des Kissens wie in Fig. 5 gezeigt ist.

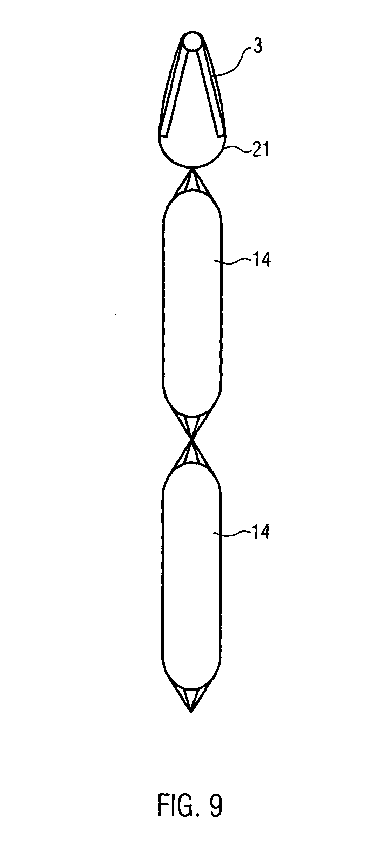

Die zuvor gezeigten Ausführungsbeispiele wurden in Zusammenhang mit Wurstketten 14, die auf dem Auflageabschnitt 3 aufliegen, beschrieben. Es ist jedoch auch möglich, als zusätzliches Element Aufhängeschlaufen 21 zu verwenden, die zum Beispiel beim Klippen an den Anfang oder das Ende einer Wurstkette oder einer einzelnen Wurst angebracht werden. Die Einzelwürste bzw. Wurstketten werden dann über die Aufhängeschlaufe 21, wie in Fig. 9 gezeigt ist, auf dem Aufnahmehaken 1 aufgehängt. Eine Vielzahl solcher nebeneinander aufgehängter Wurstketten 14 wird anschließend den Aufnahmehaken 1 wieder entnommen und auf einen Rauchstock gebracht. Auch hier ist es hilfreich, Aufnahmehaken mit veränderbarer Geometrie zu verwenden, da einerseits die Schlaufengröße variieren kann und es andererseits vorteilhaft ist, bei der Entnahme der Wurstketten von den Aufnahmehaken die Abmessung des Auflageabschnitts klein zu halten.

Nachfolgend wird ein Verfahren gemäß der vorliegenden Erfindung näher erläutert.

Bei dem erfindungsgemäßen Verfahren werden zunächst die gefüllten Wurstketten 14, wie am besten aus Fig. 8 hervorgeht, der Aufhängevorrichtung 15 übergeben, wobei die Wurstketten 14 mit Hilfe der Aufnahmehaken 1 in Schleifen aufgehängt werden, wie aus Fig. 7 hervorgeht. Vor der Aufnahme der Wurstketten 14 wird die geometrische Form des Aufnahmeabschnitts den Produktionsbedingungen, wie etwa Kaliber, Anzahl der Würste in den Ketten oder Größe der Aufhängeschlaufe 21, eingestellt. Bei Aufnahme der Wurstkette 14 auf den Haken wird die laterale Außenabmessung des Auflageabschnitts 3 klein gehalten, so dass der Spreizwinkel β der aufliegenden Wurstkette klein ist, um möglichst wenige Störkonturen zu haben.

Auch wenn die Wurstketten bzw. Einzelwürste an Aufhängeschlaufen 21 an den Aufnahmehaken 1 aufgehängt werden, ist es vorteilhaft, wenn die Geometrie des Auflageabschnitts des Aufnahmehakens bei der Aufnahme klein gehalten wird.

Die von dem Haken 1 getragene Wurstkette 14 wird dann durch Bewegung der Fördereinrichtung 16 in Transportrichtung bewegt. Nachdem eine bestimmte Anzahl an Wurstschleifen 14 nebeneinander aufgehängt worden sind, wird anschließend manuell oder automatisch ein Rauchstock 11 in die Schleifen eingeführt, um die Wurstketten 14 von den Aufnahmehaken 11 zu entnehmen, damit die Wurstketten 14 weiteren Prozessschritten zugeführt werden können. Zum Einführen des Rauchstocks 11 werden daher die Wurstschleifen gespreizt, indem die laterale Außenabmessung des Auflageabschnitts 3 vergrößert wird, wie beispielsweise in Zusammenhang mit den Fig. 1, 4 und 5 erläutert wurde. Durch den größeren Spreizwinkel β kann der Rauchstock auf einfache Art und Weise eingefädelt werden. Nach dem Einfädeln kann, falls notwendig, der Spreizwinkel wieder verkleinert werden, indem die laterale Außenabmessung des Auflageabschnitts verkleinert wird.

Die Steuereinrichtung 20 kann entsprechende mechanische oder pneumatische Verstelleinrichtungen ansteuern, die dann den Auflageabschnitt 3 in die entsprechende Geometrie bringen. Es ist auch möglich, dass mit Hilfe einer Kulissenführung die geometrische Form des Aufnahmeabschnitts 3 in Abhängigkeit der Stelle, an der sich der Aufnahmehaken während des Transports befindet, automatisch eingestellt wird. So kann die Kulissenführung derart ausgebildet sein, dass bei Aufnahme der Wurstketten eine mechanische Verstelleinrichtung den Auflageabschnitt derart einstellt, dass sich ein großer Spreizwinkel β ergibt, wobei unmittelbar nach der Aufnahmestelle in Transportrichtung die Kulissenführung derart ausgebildet ist, dass ein großer Spreizwinkel β entsteht.

Die vorliegende Erfindung stellt somit für unterschiedliche Prozessbedingungen und Prozessschritte immer eine optimale Hakengeometrie bereit.

Die Erfindung wurde hier in Zusammenhang mit drehbar gelagerten Spreizarmen beschrieben. Um die Größe, d.h. insbesondere die laterale Abmessung des Auflageabschnitts zu ändern kann der Auflageabschnitt z.B. auch zwei seitlich angeordnete Elemente umfassen, von denen zumindest eines in seitlicher Richtung hin und her bewegbar ist um die Wurstkette zu spreizen bzw. den Spreizwinkel zu verkleinern .

## Patentansprüche

1. Aufnahmehaken (1) zum Aufhängen von gefüllten Wurstketten (14) oder Einzelwürsten mit einem Tragarm (2), der im unteren Bereich einen Auflageabschnitt (3) aufweist, auf dem die Wurstkette (14) oder eine Aufhängeschlaufe (21) zumindest teilweise aufliegt, **dadurch gekennzeichnet, dass** die geometrische Form des Auflageabschnitts veränderbar ist und
der Auflageabschnitt (3) zwei unter einem veränderbaren Winkel (α) aufeinander zulaufende Spreizarme umfasst, von denen mindestens einer beweglich ist.

2. Aufnahmehaken (1) nach Anspruch 1, **dadurch gekennzeichnet, dass** die laterale Außenabmessung des Auflageabschnitts (3) derart veränderbar ist, dass der Spreizwinkel (β) einer aufliegenden Wurstkette (14) bzw. der Spreizwinkel (β) der Aufhängeschlaufe (21) veränderbar ist.

3. Aufnahmehaken (1) nach Anspruch 1 oder 2 **dadurch gekennzeichnet, dass** der Aufnahmehaken (1) eine mechanische oder pneumatische Verstelleinrichtung (6, 7, 8, 9, 10) umfasst, die die geometrische Form des Auflageabschnitts (3) verändert.

4. Aufnahmehaken (1) nach Anspruch 3, **dadurch gekennzeichnet, dass** die mechanische Verstelleinrichtung (6, 7, 8, 9) eine Kulissenführung umfasst oder motorisch verstellbar ist.

5. Aufhängevorrichtung (15) zum Aufhängen von gefüllten Wurstketten oder Einzelwürsten mit mehreren Aufnahmehaken (1) nach mindestens einem der Ansprüche 1 bis 6, sowie mit einer Einrichtung (16) zum Transportieren der Aufnahmehaken (1) in Transportrichtung T.

6. Aufhängevorrichtung (15) nach Anspruch 5, **dadurch gekennzeichnet, dass** die Aufhängevorrichtung (15) eine Kulissenführung (10) umfasst, so dass bei Bewegung der Aufnahmehaken (1) in Transportrichtung die geometrische Form des Abschnitts (3) veränderbar ist.

7. Aufhängevorrichtung (15) nach Anspruch 5, **dadurch gekennzeichnet, dass** die Aufhängevorrichtung (15) eine Steuerung (20) umfasst, die während der Produktion in Abhängigkeit eines jeweiligen Produktionsschrittes eine mechanische oder pneumatische Verstelleinrichtung (6, 7, 8, 9) ansteuert, die wiederum die geometrische Form des Auflageabschnitts entsprechend verändert.

8. Verfahren zum Aufhängen von gefüllten Wurstketten (14) oder Einzelwürsten mit einem Aufnahmehaken (1), der einen Tragarm (2) umfasst, an dessen unteren Bereich ein Auflageabschnitt (3) angeordnet ist, auf dem die Wurstkette (14) oder eine Aufhängeschlaufe (21) zumindest teilweise aufliegt,
**dadurch gekennzeichnet, dass**
die geometrische Form eines Auflageabschnitts (3) des Aufnahmehakens (1) in Abhängigkeit von Produktionsbedingungen und/oder Produktionsschritten verändert wird, indem ein Winkel (α) unter dem zwei Spreizarme (4a, b) des Auflageabschnitts (3) aufeinander zulaufen, verändert wird, durch Bewegen von mindestens einem Spreizarm (3).

9. Verfahren nach Anspruch 8, **dadurch gekennzeichnet, dass** die geometrische Form des Auflageabschnitts (3) während der Produktion verändert wird.

10. Verfahren nach Anspruch 8 oder 9, **dadurch gekennzeichnet, dass** die geometrische Form des Auflageabschnitts (3) während der Produktion derart eingestellt wird, dass bei Aufnahme einer Wurstkette (14) auf den Aufnahmehaken (1) der Spreizwinkel (β) der aufliegenden Wurstkette (14) ein spitzer Winkel ist.

11. Verfahren nach mindestens einem der Ansprüche 8 bis 10, **dadurch gekennzeichnet, dass** vor dem Einführen eines Rauchstocks (11) in die Wurstketten (14) der Spreizwinkel (β) aufliegender Wurstketten (14) vergrößert wird.

12. Verfahren nach mindestens einem der Ansprüche 8 bis 11, **dadurch gekennzeichnet, dass** beim Entnehmen eines mit Wurstketten (14) behängten Rauchstocks (11) aus den Aufnahmehaken (1) der Spreizwinkel (β) der aufliegenden Wurstkette verkleinert wird.

## Claims

1. Support hook (1) for hanging filled strings of sausages (14) or individual sausages, comprising a carrier arm (2), which has in the lower region thereof a support portion (3) on which the string of sausages (14) or a hanging loop (21) lies at least in part, **characterised in that** the geometric shape of the support portion (3) is adjustable and the support portion (3) comprises two spreader arms, which lie at an adjustable angle (α) relative to one another and at least one of which is movable.

2. Support hook (1) according to claim 1, **characterised in that** the external lateral dimension of the support portion (3) is adjustable in such a way that the angle of spread (β) of a supported string of sausages (14) or the angle of spread (β) of the hanging loop (21) can be adjusted.

3. Support hook (1) according to either claim 1 or claim 2, **characterised in that** the support hook (1) comprises a mechanical or pneumatic adjustment means (6, 7, 8, 9, 10) which adjusts the geometric shape of the support portion (3).

4. Support hook (1) according to claim 3, **characterised in that** the mechanical adjustment means (6, 7, 8, 9) comprises a sliding block guide or can be adjusted in a motor-driven manner.

5. Hanging device (15) for hanging filled strings of sausages or individual sausages, comprising a plurality of support hooks (1) according to at least one of claims 1 to 6 and comprising a means (16) for transporting the support hooks (1) in a transport direction T.

6. Hanging device (15) according to claim 5, **characterised in that** the hanging device (15) comprises a sliding block guide (10) so that as the support hook (1) moves in the transport direction, the geometric shape of the portion (3) can be adjusted.

7. Hanging device (15) according to claim 5, **characterised in that** the hanging device (15) comprises a control system (20) which controls a mechanical or pneumatic adjustment means (6, 7, 8, 9) during production as a function of the respective production step, said means in turn adjusting the geometric shape of the support portion accordingly.

8. Method for hanging filled strings of sausages (14) or individual sausages, comprising a support hook (1), which comprises a carrier arm (2), in the lower region of which is arranged a support portion (3) on which the string of sausages (14) or a hanging loop (21) lies at least in part, **characterised in that** the geometric shape of a support portion (3) of the support hook (1) is adjusted as a function of production conditions and/or production steps **in that** an angle (α), at which two spreader arms (4a, b) of the support portion (3) extend relative to one another, is adjusted by moving at least one spreader arm (3).

9. Method according to claim 8, **characterised in that** the geometric shape of the support portion (3) is adjusted during production.

10. Method according to either claim 8 or claim 9, **characterised in that** the geometric shape of the support portion (3) is adjusted during production in such a way that when a string of sausages (14) is received on the support hook (1), the angle of spread (β) of the supported string of sausages (14) is an acute angle.

11. Method according to at least one of claims 8 to 10, **characterised in that** the angle of spread (β) of the supported strings of sausages (14) is increased before a smoke stick (11) is introduced into the strings of sausages (14).

12. Method according to at least one of claims 8 to 11, **characterised in that** when a smoke stick (11) hung up with strings of sausages (14) is removed from the support hooks (1), the angle of spread (β) of the supported string of sausages is reduced.

## Revendications

1. Crochet de support (1) pour l'accrochage de chapelets de saucisses remplis (14) ou de saucisses individuelles, comprenant un bras-support (2) qui présente dans la zone inférieure une section d'appui (3), sur laquelle s'applique au moins en partie le chapelet de saucisses (14) ou une boucle d'accrochage (21), **caractérisé en ce que** la géométrie de la section d'appui est variable et
la section d'appui (3) comprend deux bras d'écartement, dont l'un au moins est mobile, qui se terminent l'un l'autre sous un angle variable (α).

2. Crochet de support (1) suivant la revendication 1, **caractérisé en ce que** la dimension extérieure latérale de la section d'appui (3) est modifiable de telle sorte que l'angle d'écartement (β) d'un chapelet de saucisses (14) appliqué ou l'angle d'écartement (β) de la boucle d'accrochage (21) est variable.

3. Crochet de support (1) suivant l'une des revendications 1 et 2, **caractérisé en ce que** le crochet de support (1) comprend un dispositif de réglage (6, 7, 8, 9, 10) mécanique ou pneumatique, qui modifie la géométrie de la section d'appui (3).

4. Crochet de support (1) suivant la revendication 3, **caractérisé en ce que** le dispositif de réglage mécanique (6, 7, 8, 9) comprend un guide de coulisse ou est réglable par motorisation.

5. Dispositif d'accrochage (15) pour l'accrochage de chapelets de saucisses remplis ou de saucisses individuelles, comprenant plusieurs crochets de support (1) suivant l'une au moins des revendications 1 à 6, ainsi qu'un dispositif (16) pour le transport des crochets de support (1) dans la direction de transport (T).

6. Dispositif d'accrochage (15) suivant la revendication 5, **caractérisé en ce que** le dispositif d'accrochage (15) comprend un guide de coulisse (10), de sorte que la géométrie de la section (3) est variable lors du déplacement des crochets de support (1) dans la direction de transport.

7. Dispositif d'accrochage (15) suivant la revendication 5, **caractérisé en ce que** le dispositif d'accrochage (15) comprend une commande (20) qui commande pendant la production, en fonction d'une étape de production respective, un dispositif de réglage (6, 7, 8, 9) mécanique ou pneumatique, qui modifie en conséquence pour sa part la géométrie de la section d'appui.

8. Procédé d'accrochage de chapelets de saucisses remplis (14) ou de saucisses individuelles par un crochet de support (1), qui comprend un bras-support (2) sur la zone inférieure duquel est disposée une section d'appui (3), sur laquelle s'applique, au moins en partie, le chapelet de saucisses (14) ou une boucle d'accrochage (21),
**caractérisé en ce que**
la géométrie d'une section d'appui (3) du crochet de support (1) est variable en fonction de conditions et/ou d'étapes de production, un angle (α), sous lequel se terminent l'un l'autre deux bras d'écartement (4a, b) de la section d'appui (3), étant modifiable par déplacement d'au moins un bras d'écartement (3).

9. Procédé suivant la revendication 8, **caractérisé en ce que** la géométrie de la section d'appui (3) est modifiée pendant la production.

10. Procédé suivant l'une des revendications 8 et 9, **caractérisé en ce que** la forme géométrique de la section d'appui (3) est réglée pendant la production de telle sorte que, lors de la réception d'un chapelet de saucisses (14) sur le crochet de support (1), l'angle d'écartement (β) du chapelet de saucisses (14) appliqué est un angle aigu.

11. Procédé suivant l'une au moins des revendications 8 à 10, **caractérisé en ce que** l'angle d'écartement (β) de chapelets de saucisses (14) appliqués est augmenté avant l'introduction d'une barre de fumage (11) dans les chapelets de saucisses (14).

12. Procédé suivant l'une au moins des revendications 3 à 11, **caractérisé en ce que** l'angle d'écartement (β) du chapelet de saucisses appliqué est réduit lors du retrait d'une barre de fumage (11), accrochée aux chapelets de saucisses (14), des crochets de support (1).
